# FASCICULE DE BREVET EUROPEEN

(11) **EP 2 583 173 B1**
(45) Date de publication et mention de la délivrance du brevet: **05.08.2020**
(21) Numéro de dépôt: 11730721.5
(22) Date de dépôt: 03.06.2011
(51) Int. Cl.: G06F 9/445

(54) **METHODE DE COMPRESSION ET DE DECOMPRESSION D'UN PROGRAMME EXECUTABLE OU INTERPRETABLE**
VERFAHREN ZUR KOMPRIMIERUNG UND DEKOMRPIMIERUNG EINES AUSFÜHRBAREN ODER INTERPRETIERBAREN PROGRAMMS
METHODE DE COMPRESSION ET DE DECOMPRESSION D'UN PROGRAMME EXECUTABLE OU INTERPRETABLE

(30) Priorité: 03.06.2010 FR 1002361
(43) Date de publication de la demande: 24.04.2013
(73) Titulaire: THALES DIS DESIGN SERVICES SAS, 13590 Meyreuil (FR)
(72) Inventeur: COULON, Jean-Roch, F-13100 Le Tholonet (FR); PEREZ, Jorge, F-13100 Aix en Provence (FR); TEISSIER, Sylvère, F-84150 Violès (FR)
(74) Mandataire: Macquet, Christophe
(86) Numéro de dépôt international: PCT/FR2011/000328
(87) Numéro de publication internationale: WO 2011/151545

(56) Documents cités:
- WO-A1-01/41312
- US-A1- 2003 229 709
- US-A1- 2005 268 293
- US-A1- 2006 206 886
- US-B1- 7 185 330

## Description

### DOMAINE DE L'INVENTION

L'histoire des microprocesseurs est marquée par un nombre restreint de jeux d'instructions. Ces jeux d'instructions ont des performances spécifiques et certains sont utilisés par des produits fabriqués en très grandes quantités. Ces derniers sont devenus des jeux d'instructions classiques et les applications développées avec ces jeux d'instructions sont essentiellement non embarquées sur un seul Circuit Intégré [C.I.]. Les programmes exécutés avec les jeux d'instructions classiques occupent davantage de place en mémoire comparativement aux programmes exécutés avec les jeux d'instructions développés spécifiquement pour des applications embarquées sur un seul C.I. ou plusieurs C.I..

Ces programmes destinés aux applications embarquées sur un seul C.I. ou plusieurs C.I. pourraient utiliser les jeux d'instructions classiques et ainsi bénéficier de leurs atouts.

La présente invention concerne une méthode de compression et de décompression et un dispositif de décompression d'un programme constitué d'instructions interprétable par un interpréteur ou exécutable par un microprocesseur. La méthode ou le dispositif de cette invention s'appliquent à tout type de jeux d'instructions.

### ART ANTERIEUR

Les fabricants de microprocesseurs proposent une suite d'outils destinée à porter l'application codée en langage évolué, tel le langage C, sur les jeux d'instructions proposés pour les microprocesseurs. Pour une même technologie la surface du C.I. est directement liée à la taille de la mémoire du C.I. dans laquelle est stockée l'ensemble des instructions de l'application. Le C.I. d'une carte à puce réalisé, par exemple, en technologie 130 nm avec un point mémoire flash de 0,18 pm2, a 70% de sa surface occupé par les 350 kOctets de la mémoire.

Les utilisateurs de microprocesseurs veulent distribuer des produits sécurisés. Pour se prémunir contre le vol de la propriété intellectuelle contenue dans le programme stocké en mémoire, les produits doivent être protégés contre le reverse engineering (ingénierie inverse) de ces produits une fois distribués sur le terrain et contre le piratage du programme lorsque la programmation de la mémoire est délocalisée. De plus, pour contrer les tentatives de déroutements du programme propices à l'extraction d'informations nuisibles aux exploitants de l'application embarquée, les produits doivent se protéger contre ces tentatives de déroutements, les détecter et les signaler.

Ainsi l'utilisateur de microprocesseurs destinés aux applications embarquées sélectionne le microprocesseur et sa suite d'outils tels que :
- les applications se portent avec facilités,
- l'espace mémoire est minimum,
- le jeu d'instructions est puissant, c'est-à-dire minimise la consommation énergétique du dispositif et l'exécution du programme se fait rapidement,
- le dispositif est protégé contre les attaques.

Comme cela a été précédemment signalé, les surfaces occupées par la mémoire dans les C.I. des cartes UICC qui embarquent en particulier l'application identification des abonnés (SIM, Subscriber Identification Module) peuvent représenter 60 % à 80 % de la surface du C.I. desdites cartes UICC. Ainsi, compte tenu des volumes, plusieurs milliards de cartes SIM fabriquées en 2009, réduire la surface consacrée à la mémoire est essentiel. Les développeurs de dispositifs embarqués veulent une surface mémoire faible, et une consommation réduite. Ces critères déterminent le jeu d'instructions.

Les jeux d'instructions de certains microprocesseurs permettent des programmes denses par construction. C'est le cas, en particulier, des jeux d'instructions des familles de processeurs 32 bits Motorola™ 68K et Intel™ x86. La compression des programmes pour de tels processeurs selon l'invention présente donc peu d'intérêt. Par contre, les jeux d'instructions d'autres microprocesseurs plus récents destinés à servir des applications plus spécifiques produisent des programmes d'une densité faible. C'est le cas, en particulier, des microprocesseurs 32 bits à jeu d'instructions réduit RISC (Reduced Instruction Set Computer, en langue anglaise). La méthode de compression et de décompression appliquées aux programmes de ces processeurs selon l'invention présente alors un grand intérêt.

Le document intitulé « Compact Programme Génération through Custom Instruction Sets », unclassified version of TN 417/96, Maarten Wegdam revisited by Rik van de Wiel, unclassified report 822/98 , date of issue 09/98, Philips Electronics™ 1998, divulgue une méthode de compression avec définition d'un nouveau jeu optimisé d'instructions pour minimiser la taille du programme résultant. Cette optimisation est faite au niveau de la compilation à partir d'un apprentissage par rapport au programme C à compiler. Lorsque cette méthode est appliquée au jeu d'instructions d'un processeur RISC (MIPS), la taille du programme résultant est égale au 1/3 de la taille du programme d'origine. Néanmoins, l'exécution des instructions du jeu de compression d'instructions est considérablement plus lente que celles du jeu initial d'instructions. En effet, le temps de décompression pénalise le temps d'exécution de l'application.

D'autres méthodes proposées selon l'art antérieur sont basées sur le chargement par blocs d'un programme compressé dans un espace tampon avec une décompression ultérieure. Ces méthodes requièrent des ressources matérielles et temporelles additionnelles. De ce fait, ces méthodes ne sont pas adaptées aux dispositifs embarqués.

Toujours selon l'art antérieur, dans les processeurs RISC 32 bits ARM™ ou MIPS, de nouvelles instructions sont codées sur 16 bits. En utilisant les instructions sur 16 bits et les instructions sur 32 bits, à la place des seules instructions codées sur 32 bits, l'espace mémoire a été réduit de 20 à 30 %. Toutefois, cette méthode est basée sur la définition d'un nouveau jeu d'instructions propriétaires qui: réduit le nombre de registres, limite la plage des adresses accessibles, limite la taille des champs dans les instructions 16 bits, et les nouvelles instructions 16 bits n'ont pas les possibilités fonctionnelles des instructions sur 32 bits.

Enfin, le document intitulé « Revisiting Java Byteprogramme Compression for Embedded and Mobile Computing Environments », Dimitris Saougkos et al, IEEE Transactions on Software Engineering, Vol. 33, No 7, juillet 2007, détaille une méthode de compression basée sur l'identification de séquences d'instructions similaires dans un programme. Selon cette méthode, les instructions compressées sont codées dans les opcodes non utilisés du jeu initial d'instructions. La méthode de détermination des Patrons de répétition n'est pas réalisable en pratique. De plus, la place disponible pour programmer les nouveaux opcodes n'est pas suffisante pour créer un nombre significatif de patrons de répétition.

Par ailleurs, le document US2006/206886 divulgue un procédé de réduction de la taille du code, des sous-ensembles d'instructions remplaçables aux premiers emplacements dans des zones d'instructions rarement exécutées dans un ensemble d'instructions et des sous-ensembles cibles d'instructions situés à des seconds emplacements dans l'ensemble d'instructions sont identifiés, chaque sous-ensemble remplaçable correspondant à au moins un sous-ensemble cible. Si plusieurs sous-ensembles d'instructions cibles correspondent à un sous-ensemble d'instructions remplaçables, l'un des multiples sous-ensembles cibles correspondants est choisi comme sous-ensemble cible correspondant pour le sous-ensemble remplaçable en fonction du fait que les multiples sous-ensembles cibles sont situés dans des régions de code fréquemment exécuté. Pour chacun d'au moins certains des sous-ensembles d'instructions remplaçables, le sous-ensemble d'instructions remplaçables est remplacé par une instruction afin de provoquer l'exécution du sous-ensemble d'instructions cible correspondant au deuxième emplacement.

### RESUME DE L'INVENTION

La présente invention résout les problèmes de densité et de sécurité d'un programme en définissant une méthode de compression et de décompression et un dispositif de décompression de ce programme constitué d'instructions d'un jeu d'instructions et interprétable par un interpréteur ou exécutable par un microprocesseur. La méthode et le dispositif de cette invention s'appliquent à tout type de jeux d'instructions.

L'invention a pour objets une méthode de compression et de décompression d'un programme initial exécutable par un microprocesseur ou interprétable par un interpréteur d'un dispositif à Circuits Intégrés, comportant les étapes suivantes de :
fourniture d'un programme initial comprenant des instructions initiales comprenant un champ opcode et un champ d'instruction ;
a) reformatage, par une fonction f, des instructions initiales dudit programme initial, comprenant une réorganisation des champs de bits contenus dans les instructions, pour l'obtention d'instructions intermédiaires d'un programme intermédiaire dans lesquelles l'information utile contenue dans les champs d'instructions initiales est regroupée dans un champ d'information ;
b) détermination de Patrons de répétition de m bits dans le programme intermédiaire et comprenant m - q bits fixés à 0 ou à 1, et q bits génériques, et de définition, pour chaque Patron de répétition, d'un couple formé dudit Patron de répétition et d'une instruction compressée par une fonction h ;
c) remplacement des instructions intermédiaires du programme intermédiaire par les instructions compressées et de modification des liens du programme pour l'obtention d'un programme compressé par une fonction g ;
d) remplacement des instructions compressées du programme compressé par les instructions intermédiaires par la fonction g-¹ pour l'obtention du programme intermédiaire; et de
e) reformatage des instructions intermédiaires par la fonction f⁻¹ pour l'obtention du programme initial ; et
   un dispositif à Circuits Intégrés apte à exécuter un programme exécutable par un microprocesseur dudit dispositif ou à interpréter un tel programme interprétable par un interpréteur dudit dispositif, comprenant un programme compressé selon la méthode.

De manière avantageuse, - à l'étape a, pour augmenter la similarité dans le programme intermédiaire, l'adressage relatif est transformé en adressage absolu et/ou des champs spécifiques sont classés et/ou certains champs sont inversés ; - les Patrons de répétitions, à l'étape b, sont déterminés en appliquant la méthode suivante : étape 1 : affectation de valeurs aux paramètres m, q et c ; étape 2 : de manière facultative, pour toutes les macros dans un groupe de macros, calcul de la probabilité de la valeur par bit ; étape 3 : de manière facultative, fixation à 0 ou 1 des bits dont la probabilité est la plus proche de 0 ou 1, respectivement ; étape 4 : extraction du groupe de macros, toutes les macros ne satisfaisant pas la décision précédente ; étape 5 : retour à l'étape 2 sauf si le nombre nécessaire de positions fixées a été atteint ; étape 6 : si n est le nombre de macros rattachées au Patron de répétitions, le nombre n x (m - c) de bits peut être économisé, et le Patron de répétition est ajouté à la liste des Patrons de répétition ; - le programme compressé à l'étape c est crypté puis décrypté avant l'étape d ; - le programme crypté est décrypté à la volée ; - le programme compressé est décompressé à la volée et les instructions initiales sont exécutées ; - le reformatage des instructions définit de nouveaux champs destinés aux informations de saut et/ou aux nouveaux opcodes et/ou à de la redondance pour s'assurer de l'intégrité des instructions et/ou de l'information destinée à la protection contre le déroutement du programme ; - un nouveau champ contient la signature des instructions et/ou des adresses des instructions et/ou l'adresse à laquelle on accède en cas de saut ; - des informations additionnelles sont insérées entre deux instructions compressées ; - l'algorithme de décompression, fonctions g-¹ et/ou f⁻¹, est synthétisé en matériel sur un des circuits intégrés ; - le dispositif est relié au monde extérieur par au moins un des canaux de communications suivants : Single Wire Protocol, NFC(ISO14443), USB ou l'ISO/IEC7816-3 et piloté par un microprocesseur qui exécute à la volée les instructions initiales d'un programme stockées compressées dans la mémoire d'un des circuits intégrés ; - l'ensemble des instructions compressées dudit programme est stocké dans la mémoire non volatile d'un des circuits intégrés ; - le microprocesseur est un microprocesseur RISC.

### BREVE DESCRIPTION DES FIGURES

L'invention sera mieux comprise à la lecture de la description non limitative qui suit, rédigée au regard des Figures annexées, dans lesquelles :
la Figure 1 illustre les différentes étapes des méthodes de compression/décompression et de synthèse du matériel de décompression;
la Figure 2 illustre l'étape de reformatage des instructions initiales pour l'obtention d'instructions intermédiaires;
la Figure 3 illustre l'étape de réorganisation des champs de bits des instructions en vue d'augmenter la similarité dans le programme ;
la Figure 4 présente deux exemples de champs de bits utiles à ajouter à l'instruction pour contrôler l'intégrité des instructions et/ou les déroutement de programme ;
la Figure 5 illustre l'étape de création du jeu de compression d'instructions ;
la Figure 6 illustre les étapes de décompression, ainsi que les éléments matériels intervenant dans ces étapes ; et
les Figures 7.1 et 7.2 comparent les tailles de différents programmes exécutés par le microprocesseur SPARC-V8™ dans le cas où lesdits programmes ne sont pas compressés et dans le cas où lesdits programmes sont compressés, c'est-à-dire mis au format du jeu de compression d'instructions selon l'invention.

### DESCRIPTION DETAILLEE DE L'INVENTION

La compression se fait sans ou avec perte d'information. La présente application décrit une compression sans perte d'information. L'homme de l'art peut appliquer la présente invention à une compression avec perte d'information.

L'invention s'applique à des dispositifs à circuits intégrés et, notamment, mais non exclusivement, aux dispositifs embarqués.

Les C.I. des dispositifs embarqués visés dans la présente invention disposent de ressources matérielles et logicielles réduites en comparaison des ressources matérielles et logicielles des ordinateurs et, en particulier, des ordinateurs personnels. A titres d'exemples, cette invention s'applique principalement aux C.I. des objets à circuit(s) intégré(s), notamment les modules pour cartes UICC (dénommées communément cartes SIM) ou tout autre objet communicants sécurisés tels que passeport, carte de transport, carte santé, permis de conduire etc.. D'autres dispositifs embarqués pourraient bénéficier de cette invention en particulier les plates-formes de téléphones mobiles, des baladeurs ou des liseuses. De même peuvent bénéficier de cette invention les applications machines à machines où un module de sécurité est embarqué dans une des machines au moins comme les compteurs d'électricité, les véhicules automobiles ou tous les objets nécessitant un tel module de sécurité.

Le jeu d'instructions d'un microprocesseur est l'ensemble des opérations exécutables par le microprocesseur.

Le jeu d'instructions d'un interpréteur est l'ensemble des opérations interprétables par l'interpréteur.

Dans un exemple selon l'invention, le jeu d'instructions est un jeu d'instructions réduit. Le microprocesseur est alors un microprocesseur RISC. Dans un exemple plus spécifique, le jeu d'instructions est le jeu d'instructions du microprocesseur 32 bits SPARC-V8^{TM}.

Les instructions d'un jeu d'instructions sont constituées d'un opcode, auquel sont associés des opérandes.

La présente invention définit trois jeux d'instructions :
- initial,
- intermédiaire, et
- de compression.

Une instruction initiale est une instruction au format du jeu initial d'instructions, une instruction intermédiaire est une instruction au format du jeu intermédiaire d'instructions et une instruction compressée est une instruction au format du jeu de compression d'instructions.

Un programme initial est un ensemble d'instructions au format du jeu initial d'instructions. De la même manière sont définis un programme intermédiaire et un programme compressé.

La compression est l'ensemble des étapes menant du programme initial au programme compressé.

La décompression est l'ensemble des étapes menant du programme compressé au programme initial.

Une macro est un ensemble d'instructions intermédiaires susceptibles d'être compressées. Les macros sont des paquets de m bits.

De manière générale, la méthode de compression selon l'invention consiste à remplacer des macros par des instructions compressées avec un nombre de bits c inférieur.

En compressant n occurrences, un espace mémoire de n x (m - c) bits
est économisé. Plusieurs instructions compressées sont identifiées, pour chacune d'entre elles, n, m et c peuvent être différents.

L'invention sera mieux comprise à la lecture de la description détaillée qui suit, rédigée au regard des figures annexées, dans lesquelles :

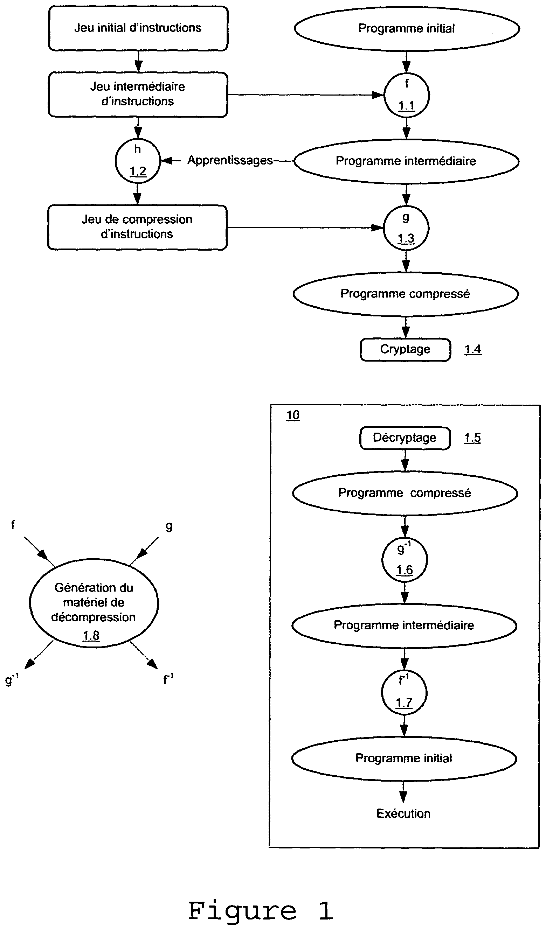

La Figure 1 représente la mise en œuvre préférée de l'invention.

Les étapes 1.1, 1.2 et 1.3 concernent la compression. Ces étapes ainsi que l'étape 1.4 sont exécutées à l'extérieur du C.I. 10 avec des moyens de calculs puissants. L'étape de synthèse du matériel de décompression est elle aussi réalisée à l'extérieur du C.I. 10. Les étapes 1.5, 1.6 et 1.7 sont effectuées par le C.I..Le jeu initial d'instructions est reformaté pour générer le jeu intermédiaire d'instructions.

A l'étape 1.1 le programme initial est modifié par la fonction f et devient le programme intermédiaire.

Le programme intermédiaire est analysé. Cet apprentissage permet de répertorier les structures notables, appelés Patrons de répétitions, présentes dans le programme intermédiaire. Les Patrons de répétitions ont la dimension des instructions intermédiaires susceptibles d'être remplacées. Ces Patrons sont composés de caractères (bits) fixes, 0 ou 1, et de caractères (bits) génériques, Z, déterminés ultérieurement.

A l'étape 1.2 la fonction h génère le jeu de compression d'instructions issu des Patrons. Chaque instruction du jeu de compression d'instruction est composé d'un identifiant pour pointer sur les Patrons et un champ de bits qui déterminent la valeur des caractères génériques, s'ils existent.

A l'étape 1.3, la fonction g remplace les instructions intermédiaires par les instructions compressées, aussi cette étape tient compte des changements des adresses. Le Programme est fait d'instructions compressées.

A l'étape 1.4, le programme peut être rendu secret avant d'être stocké dans une mémoire du dispositif 10. Le programme compressé est chiffré avec une clé secrète à l'aide d'un algorithme standard ou secret. Le programme compressé et chiffré est protégé par la clé présente dans le dispositif, possiblement embarquée, qui permet son déchiffrement. Ces secrets protègent le dispositif notamment :
- lors de la programmation de la mémoire. L'invention permet de délocaliser la programmation de la mémoire en particulier de la mémoire flash sans partager avec les industriels les algorithmes et autres fonctions confidentielles contenues dans le programme. La clé secrète de déchiffrement peut être mise en place dans une étape ultérieure de personnalisation de l'objet communicant sécurisé et
- lorsque le circuit est sur le terrain. Le programme stocké dans les mémoires est secret et donc protégé contre des attaques physiques.

A l'étape 1.8 le matériel de décompression, fonctions f⁻¹ et g-¹ ,est synthétisé pour intégration dans le C.I. 10. Ce matériel peut être reconfiguré ultérieurement sur le C.I. afin d'optimiser la compression lorsque le même C.I. est utilisé pour plusieurs applications où seul le programme diffère. En effet, afin d'optimiser la logistique, les utilisateurs souhaitent approvisionner une seule plate forme, c'est-à-dire un seul C.I., pour plusieurs applications.

A l'étape 1.5 le programme secret est déchiffré. Ledit déchiffrement est avantageusement réalisé à la volée. A l'issue de cette étape, le programme est déchiffré et encore compressé.

A l'étape 1.6 le matériel reformate par la fonction g-¹ les instructions compressées et délivre les instructions intermédiaires.

A l'étape 1.7 un autre matériel reformate par la fonction f⁻¹ les instructions intermédiaires et délivre les instructions initiales.

Les étapes 1.6 et 1.7 sont réalisées à la volée et ainsi ne pénalisent pas la durée d'exécution.

Le programme ainsi obtenu est fait d'instructions initiales.
Dans une dernière étape selon l'invention, les instructions initiales sont alors exécutées et/ou interprétées.

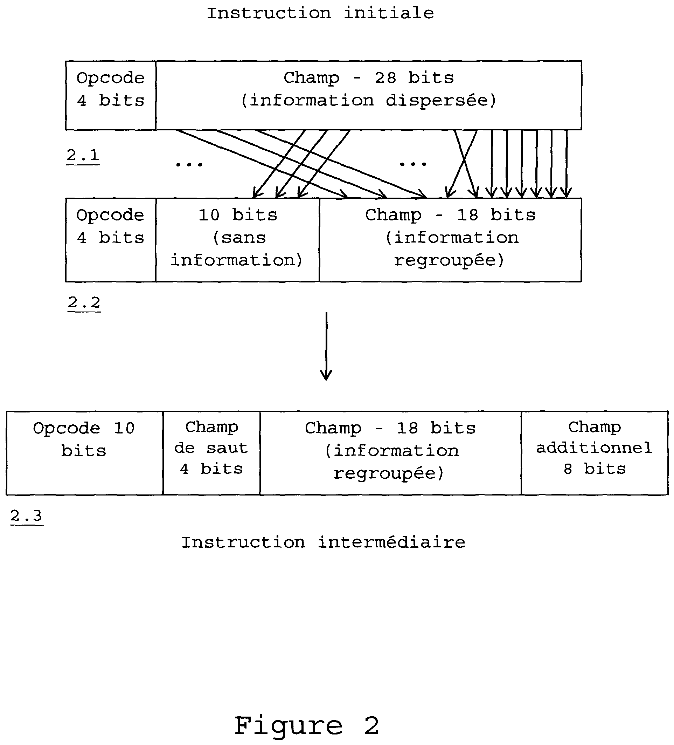

La Figure 2 détaille l'étape de reformatage 1.1 de la Figure 1 des instructions initiales pour l'obtention d'instructions intermédiaires selon l'invention.

A l'étape 2.1 présente un exemple d'instruction initiale. Cette instruction possède 32 bits et comprend un opcode de 4 bits suivi d'un champ d'instruction de 28 bits.

A l'étape 2.2 du reformatage, l'information utile contenue dans le champ d'instruction est regroupée sur les bits terminaux du champ. Ainsi, les premiers bits du champ d'instruction, situés à la suite de l'opcode, sont libérés. L'instruction initiale est transformée en une instruction comprenant, en tête, un opcode de 4 bits, suivi d'un champ libéré sans information de 10 bits, puis d'un champ d'information regroupé de 18 bits. L'instruction transformée à la suite de l'étape 2.2 a donc exactement le même nombre de bits que l'instruction du jeu initial d'instructions.

A l'étape 2.3, l'instruction issue de l'étape précédente est transformée en une instruction de taille potentiellement différente. Ladite transformation réorganise les champs de bits contenues dans l'instruction de l'étape 2.2 et offre la possibilité d'ajouter des informations supplémentaires.

Le champ destiné à la définition des opcodes est étendu et, en conséquence, augmente le nombre d'éléments du jeu d'instructions. Un champ de saut est également défini pour contenir une information destinée à effectuer des sauts au niveau de labels alignés sur octets dans le programme compressé. Des champs additionnels peuvent être ajoutés pour y inclure des informations supplémentaires.

L'instruction alors obtenue à l'issue de l'étape 2.3 est une instruction reformatée au format du jeu intermédiaire d'instructions.

L'instruction reformatée, comprend en tête, un champ opcode de 10 bits, puis un champ de saut de 4 bits, un champ d'instruction regroupé de 18 bits, et un champ additionnel de 8 bits. A l'issue du reformatage, la taille des instructions du jeu intermédiaire d'instructions peut être supérieure à celle des instructions du jeu initial d'instructions. Cette étape prépare une compression plus efficace.

Les instructions intermédiaires ne sont pas nécessairement alignées sur des octets et peuvent avoir des longueurs différentes.

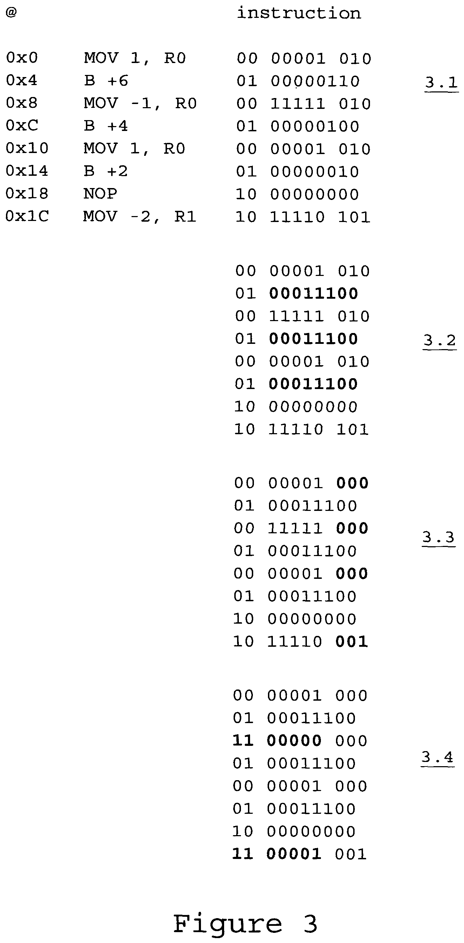

La Figure 3 expose, à titre d'exemple, une réorganisation de champs de bits en vue d'augmenter la similarité dans le programme et, par suite, d'accroitre l'efficacité de la compression ultérieure. Il s'agit des opérations complémentaires suivantes :
l'adressage relatif est avantageusement transformé en adressage absolu ;
des champs spécifiques sont avantageusement classés ; et
certains champs sont avantageusement inversés.

A l'étape 3.1 présente un exemple de programme codé dans un jeu initial d'instructions. La colonne de gauche indique les adresses, la colonne suivante les instructions et la colonne de droite le binaire résultant. Le premier champ du binaire indique l'opcode. Dans le cas d'un branche « B », le second champ code l'adresse relative, alors que pour un « MOV » le second champ code la valeur immédiate et le troisième champ le registre. Les instructions branche « B » sont relatives, et le binaire est différent. L'adressage absolu est codé de la même façon quelle que soit la position de l'instruction avec adresse dans le programme alors que l'adressage relatif dépend de la position de ladite instruction.

A l'étape 3.2 montre le binaire après remplacement de l'adressage relatif par l'adressage absolu.

D'autre part, à l'étape 3.1 sont présentés des champs de bits spécifiques dont le contenu présente une très faible variabilité. Par exemple, pour 75% des champs de registre de 3 bits de certains programmes, uniquement 2 des 2³ possibilités sont utilisées. Dans ces champs spécifiques, il est donc possible de déterminer la valeur de la plupart des bits avec une certaine probabilité. De ce fait, il est possible de déduire le contenu du champ à partir uniquement de la connaissance de la valeur des bits restants. Ces champs sont donc classés et remplacés par leur position dans le classement.

A l'étape 3.3 présente le binaire transformé après recodage du champ du registre.

A l'étape 3.4 le binaire de l'exemple est transformé selon la méthode suivante. Les deux instructions « MOV -1,...» sont modifiées afin de créer davantage de similarité dans le programme. Un champ signé de 5 bits codant le chiffre +1 ou le chiffre -1 comprennent de nombreux bits différents, alors que, si les bits représentant le -1 sont inversés, les champs deviennent très similaires. On aura donc tout intérêt à inverser ces champs. C'est par la création d'un nouvel opcode « 11 » qu'est indiquée l'inversion du champ.

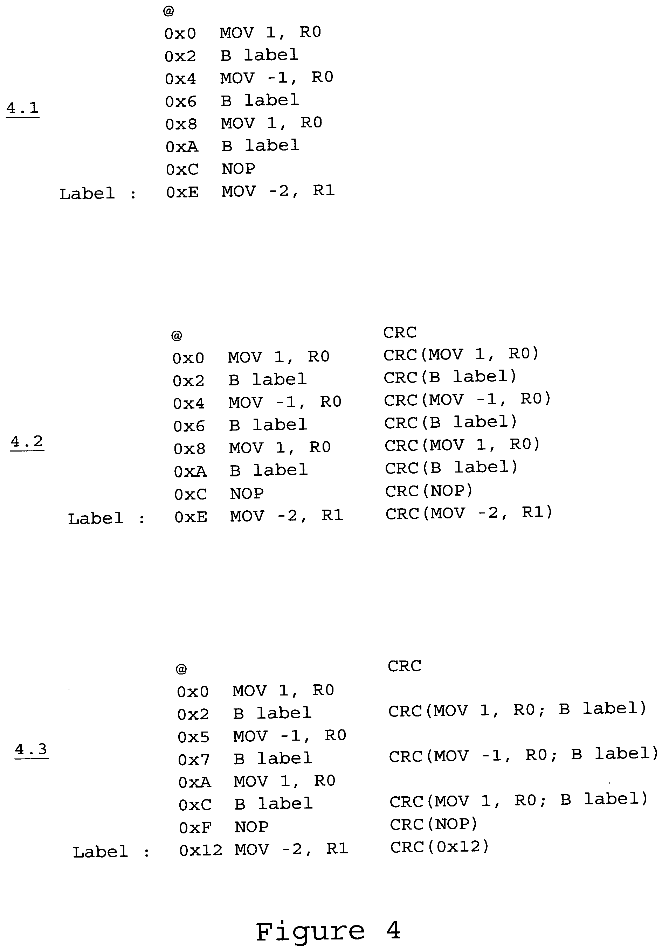

La Figure 4 présente deux types d'informations additionnelles susceptibles d'être ajoutées aux instructions initiales de l'étape 4.1. Ces informations sont insérées dans l'instruction intermédiaire lors de l'étape de reformatage du programme initial, ou alors, entrelacées entre les instructions de compression avant le chargement du programme en mémoire.

A l'étape 4.2, l'information additionnelle est un champ de détection et/ou de correction d'erreur ou champ ECC. Ledit champ est à titre d'exemple issu d'un calcul de CRC. Ce champ est particulièrement utile pour la correction de défauts mémoire. Elle accroit le rendement de fabrication des dispositifs, la fiabilité desdits dispositifs et minimise les coûts desdits dispositifs.

Le champ ECC est en outre particulièrement utile pour la protection du programme contre les attaques malveillantes, telles que les attaques procédant par injection de fautes, qui sont susceptibles de modifier le programme et être à l'origine de détournements.

A l'étape 4.3, l'information additionnelle est un champ de signature utile pour réaliser une contre-mesure aux attaques en déroutement.25 Deux types de champs de signature sont ajoutés au code compressé
- Un premier champ vérifie la bonne exécution des instructions s'exécutant sans saut. Un champ est placé après chaque instruction de saut et avant chaque label. Ledit champ signe toutes les instructions exécutées entre le précédent label ou instruction de saut et le présent label ou instruction de saut,
- Un second champ vérifie les sauts. Une signature de l'adresse de chaque label est inséré à l'adresse du label.

D'une manière générale, ledit champ signe les instructions courante et/ou adjacentes et les adresses courantes et/ou auxquelles on accède en cas de saut. L'invention permet une couverture à cent pour cent de la vérification de l'enchainement des instructions sans recourir à des modifications des outils de compilation ou de blocs sensibles du dispositif tel que le microprocesseur.

Au cours des étapes de compression, le champ de signature est calculé. Ledit champ est une information additionnelle ajoutée aux instructions intermédiaires, ou alors entrelacée entre les instructions de compression.

Au cours de l'étape de décompression, le champ de signature est calculé sur le dispositif cible, avantageusement à la volée, en fonction des instructions et des adresses entrantes dans l'étage de décompression. Une comparaison ente le champ de signature généré par calcul et celui présent dans l'instruction du jeu intermédiaire d'instructions permet de vérifier le non déroutement et l'intégrité des instructions.

L'ajout de redondances dans le programme en vue d'une correction de défauts mémoire ou d'une sécurisation des dispositifs cibles contre les attaques malveillantes est connue de l'art antérieur. Les redondances y accroissent la taille d'une mémoire spécifique. Pour les C.I. des dispositifs embarqués dont le programme peut être enrichi par des redondances durant les étapes de la compression, la taille de la mémoire occupée par le programme, avec les redondances, compressé est moindre pour une même efficacité de la correction des défauts de la mémoire et une sécurisation contre les attaques malveillantes identiques.

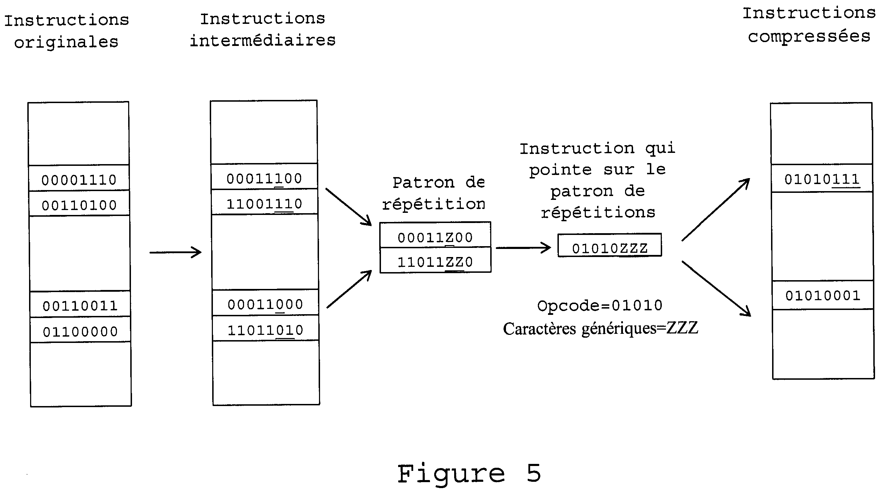

La Figure 5 détaille les étapes 1.1, 1.2 et 1.3 de la Figure 1 où sont déterminés les Patrons de répétitions, la création des instructions du jeu de compression d'instructions et le remplacement des instructions intermédiaires par les instructions compressées.

Les Patrons de répétition sont de taille m bits égale à la longueur des instructions intermédiaires susceptibles d'être remplacées, également appelées « macro ». Ils comportent m - q bits fixés à 0 ou à 1, et q bits comprenant des caractères génériques notés Z. On définit un couple formé d'un Patron de répétition et d'une instruction du jeu de compression d'instructions. Les opcodes de p bits identifient le Patron de répétition et le champ de l'instruction fixe les q valeurs des caractères génériques.

L'exemple ci-après illustre la manière selon laquelle sont déterminé les Patrons de répétition.

Supposons une suite de 40 bits du programme représentée dans les 5 lignes du tableau 1 ci-dessous :

**Tableau 1**

| Ligne | **Bit1** | **Bit2** | **Bit3** | **Bit4** | **Bit5** | **Bit6** | **Bit7** | **Bit8** |
|---|---|---|---|---|---|---|---|---|
| 1 | 0 | 0 | 0 | 0 | 0 | 0 | 0 | 1 |
| 2 | 0 | 1 | 0 | 0 | 0 | 0 | 0 | 1 |
| 3 | 1 | 0 | 1 | 0 | 0 | 0 | 0 | 1 |
| 4 | 0 | 1 | 1 | 0 | 0 | 0 | 0 | 1 |
| 5 | 0 | 0 | 0 | 0 | 0 | 0 | 0 | 1 |

Il est possible de définir le Patron de répétition « Patron I » suivant présentant 8 bits fixes et 0 caractère générique. On définit une instruction du jeu de compression d'instructions qui comprend un opcode de 3 bits et un champ de longueur 0. Cette instruction permet de remplacer les lignes 1 et 5 :

**Patron I**

| | | | | | | | |
|---|---|---|---|---|---|---|---|
| 0 | 0 | 0 | 0 | 0 | 0 | 0 | 1 |

Il est en outre possible de définir le Patron de répétition « Patron II » suivant présentant 6 bits fixes et 2 caractères génériques. On définit une instruction du jeu de compression d'instructions qui comprend un opcode de 4 bits et un champ de longueur 2. Cette instruction permet de remplacer les lignes 1, 2, 4 et 5 :

**Patron II**

| | | | | | | | |
|---|---|---|---|---|---|---|---|
| 0 | Z | Z | 0 | 0 | 0 | 0 | 1 |

Il est aussi possible de définir le Patron de répétition « Patron III » qui contient 0 bit fixes et 8 caractères génériques. On définit une instruction du jeu de compression d'instructions qui comprend un opcode de 3 bits et un champ de longueur 8. Cette instruction permettrait de remplacer toutes les lignes.

**Patron III**

| | | | | | | | |
|---|---|---|---|---|---|---|---|
| Z | Z | Z | Z | Z | Z | Z | Z |

En utilisant les instructions du jeu de compression d'instructions associés aux Patrons I, II et III, les 40 bits de programme du Tableau 1 peuvent être compressés. Un des programmes compressés possibles est représenté dans les 5 lignes numérotées 1 à 5 du Tableau 2 ci-dessous :

**Tableau 2**

| **Ligne** | **Bit1** | **Bit2** | **Bit3** | **Bit 4** | **Bit5** | **Bit6** | **Bit 7** | **Bit 8** |
|---|---|---|---|---|---|---|---|---|
| **1** | 1 | 1 | 1 | | | | | |
| **2** | 1 | 1 | 0 | 1 | 1 | 0 | | |
| **3** | 0 | 0 | 0 | 1 | 0 | 1 | 0 | 0 |
| **4** | 1 | 1 | 0 | 1 | 1 | 1 | | |
| **5** | 1 | 1 | 1 | | | | | |

Ainsi que cela apparaît dans le Tableau 2, l'instruction associée au Patron I est appliquée deux fois, pour les lignes 1 et 5, l'instruction associée au Patron II, bien qu'applicable quatre fois aux lignes 1, 2, 4 et 5, n'est appliquée que deux fois, aux lignes 2 et 4. On notera que la ligne 3 est reformatée à l'aide du Patron III.

Le programme compressé est donc de 29 bits, alors que le programme initial comprend 40 bits.

L'exemple met en évidence le fait que les Patrons de répétition sont d'efficacité différente. Déterminer des Patrons de répétition efficaces permet de compresser davantage à l'aide d'une liste de Patrons de répétition réduite.

Une analyse du jeu d'instructions et du résultat de compilation permet de dresser une liste de premier ordre de Patrons de répétition. Compresser un programme avec cette liste mène à un ratio de compression tout à fait intéressant, mais toutefois non optimal.

La méthode suivant cette invention présente un algorithme capable de déterminer un jeu de Patrons de répétitions optimal. Le dit algorithme prend comme point d'entrée les instructions produites par la compilation d'une application écrite en langage de haut niveau, en langage C ou JAVA™ par exemple. Ledit algorithme est un algorithme d'apprentissage. Le jeu de Patrons de répétitions ainsi déterminé dépend fortement du jeu d'instructions et du compilateur. Toutefois le choix de l'application de départ a peu d'influence sur ledit jeu de Patrons de répétitions dans le cas où elle reflète bien les cas d'utilisation du langage de haut niveau. Ledit jeu peut se réserver quelques Patrons de répétition configurables, c'est-à-dire que la valeur desdits Patrons de répétitions est écrite en mémoire ROM. Lesdits Patrons de répétitions couvrent les cas très spécifiques de certaines applications. Le jeu de Patrons de répétitions résultant permet de compresser tout aussi efficacement l'application choisie comme point de départ de l'algorithme que les autres applications sans recourir à un changement de matériel.

Pour obtenir une liste optimale de Patrons de répétitions, lesdits Patrons de répétitions sont déterminés en utilisant un algorithme de définition des Patrons de répétitions. Une instruction initiale est compressée de manière adéquate si :
- le nombre c de bits de ladite instruction compressée est petit,
- le nombre m de bits du Patron de répétition est grand, et
- le nombre n d'occurrences dudit Patron de répétition dans le programme à compresser est grand.

Dans ce cas, n x (m - c) bits sont susceptibles d'être économisés lors de la compression en définissant uniquement une instruction dans le jeu de compression d'instructions. Bien entendu, le nombre q de bits du nouvel opcode défini pour cette nouvelle instruction devrait être aussi court que possible, tout en étant suffisant pour que des opcodes additionnels, utiles à la compression, puissent être assignés.

Pour la mise en œuvre de la méthode selon l'invention, les macros sont avantageusement groupées selon : les types d'opcode des instructions contenus dans lesdites macros, et la nécessité de modifier les liens du programme des macros postérieurement à la compression. La détermination des Patrons de répétitions est réalisée pour chaque groupe de macros ainsi que cela est détaillé ci-après.

Les paramètres m, q et c doivent tout d'abord être fournis à l'algorithme de détermination de Patrons de répétitions. Les actions suivantes sont exécutées :
1. Affecter des valeurs aux paramètres m, q et c ;
2. Etape facultative : Calculer la probabilité de la valeur par bit pour toutes les macros dans un groupe de macros, ;
3. Etape facultative : Fixer à 0 ou 1 le bit dont la probabilité est la plus proche de 0 ou 1, respectivement ;
4. Enlever du groupe de macros, toutes les macros ne satisfaisant pas la décision précédente ;
5. Retourner à l'étape 2 à moins que le nombre nécessaire de positions fixées ait été atteint ;
   Les positions restantes sont variables et constituent le Patron de répétition. Idéalement, les bits dudit Patron de répétition ont une probabilité d'être à 0 et 1 égale à 0,5.
6. Si n est le nombre de macros rattachées au Patron de répétition, le nombre n x (m - c) de bits peut être économisé. Le Patron de répétition est alors ajouté à une liste des Patrons de répétition.

On notera que le nombre de Patrons de répétitions augmente en appliquant plusieurs fois l'algorithme avec des paramètres différents. Avantageusement, compte tenu du fait que le nombre d'instructions est limité, les Patrons de répétitions les moins performants sont éliminés au fur et à mesure de l'établissement de la liste. Seule la liste finale, comprenant les Patrons de répétition les plus performants, constitue le jeu de compression d'instructions.

On notera en outre que, compte tenu du fait que les macros, dans un groupe de macros, sont en pratique très différentes les unes des autres, la détermination des Patrons de répétitions est avantageusement guidée. A cet effet, certains bits des Patrons de répétitions sont prédéfinis à 0 ou 1 et les instructions, qui ne correspondent pas aux Patrons de définitions dont certains bits ont été prédéfinis, sont éliminées du groupe. De ce fait, le sous-groupe ainsi obtenu contient uniquement des instructions dont le nombre de bits qui diffèrent est moindre.

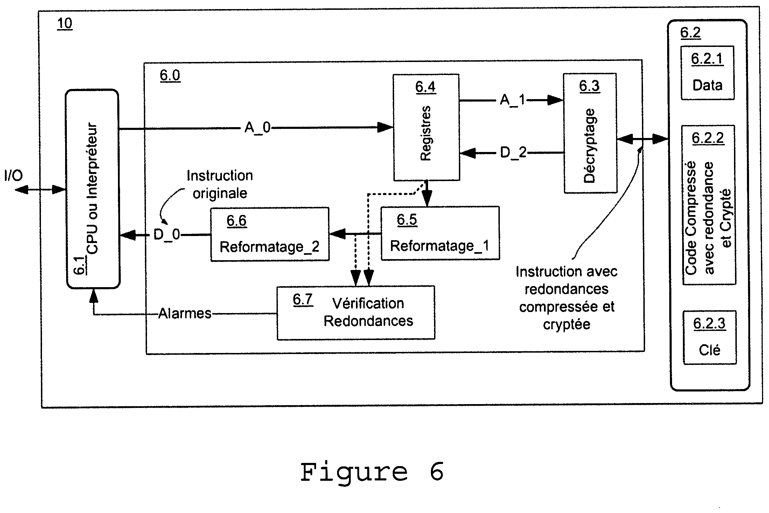

La Figure 6 présente le dispositif de décompression 6.0 selon l'invention utilisé dans un C.I. 10.

L'I/O permet de communiquer avec le monde extérieur via des canaux de communications définis dans les standards, à titre d'exemples, et de manière non limitative, Single Wire Protocol [SWP], USB, NFC 14443 ou encore ISO/IEC 7816-3....

Le dispositif de décompression se situe entre le CPU 6.1 et la Mémoire 6.2 et permet de décompresser à la volée les instructions compressées stockées en Mémoire 6.2. L'opération de décompression n'impacte pas les temps de cycle et son impact matériel est mineur à savoir le nombre de portes du matériel nécessaire à la décompression est inférieur à 4000 (4 kgates).

La mémoire 6.2 contient les informations du programme 6.2.2, les data 6.2.1 et la clé de décryptage 6.2.3. Si la clé est utilisée, elle est programmée dans l'Objet Communiquant Sécurisé préférablement par l'organisme de personnalisation immédiatement avant sa livraison au client final.

Le bloc 6.3 décrypte le programme si la fonction cryptage est activée.

Lorsque le microprocesseur CPU 6.1 requiert la lecture d'une instruction en mémoire à une adresse donnée (Fetch, en anglais), l'adresse requise est présentée aux registres 6.4. Lesdits registres tamponnent les données venant de la mémoire 6.2.2, si les octets correspondants à l'adresse demandée par le cpu sont présents dans les registres, les instructions compressées sont transférés au bloc de Reformatage_1 6.5. Dans le cas contraire, le transfert est précédé d'un ou plusieurs accès mémoire. L'instruction compressée est alors reformaté par 6.5 et par 6.6, successivement, par du matériel, afin d'obtenir dans un premier temps des instructions intermédiaires, puis des instructions initiales. Ces instructions initiales sont alors fournies au microprocesseur 6.1.

Des informations additionnelles insérées lors des étapes de compression sont extraites soit entre les étapes 6.5 et 6.6 si elles sont intégrées aux instructions intermédiaires, ou alors à la sortie des registres 6.4 si elles sont entrelacées aux instructions compressées. Par exemple, le bloc 6.7 calcule en fonction des instructions et des adresses entrantes dans l'étage de décompression le champ de signature. Une comparaison entre le champ de signature généré par calcul et celui présent dans l'instruction intermédiaire vérifie le non déroutement et l'intégrité des instructions et génère au moins une alarme en cas de détection d'erreur.

Il est utile de définir une fonctionnalité qui désactive et active la décompression, ce qui permet au microprocesseur l'exécution de programme au format du jeu d'instruction soit initial ou soit de compression.
La compression est par exemple désactivée pour insérer un patch composées d'instructions initiales, ou pour exécuter uniquement des instructions initiales. L'activation ou la désactivation peut se faire par exemple par insertion dans le programme de la mémoire d'une instruction NOP avec un champ qui indique quelle configuration adopter. L'information contenue dans ladite instruction configure la décompression et une instruction NOP normale est transmise au microprocesseur.

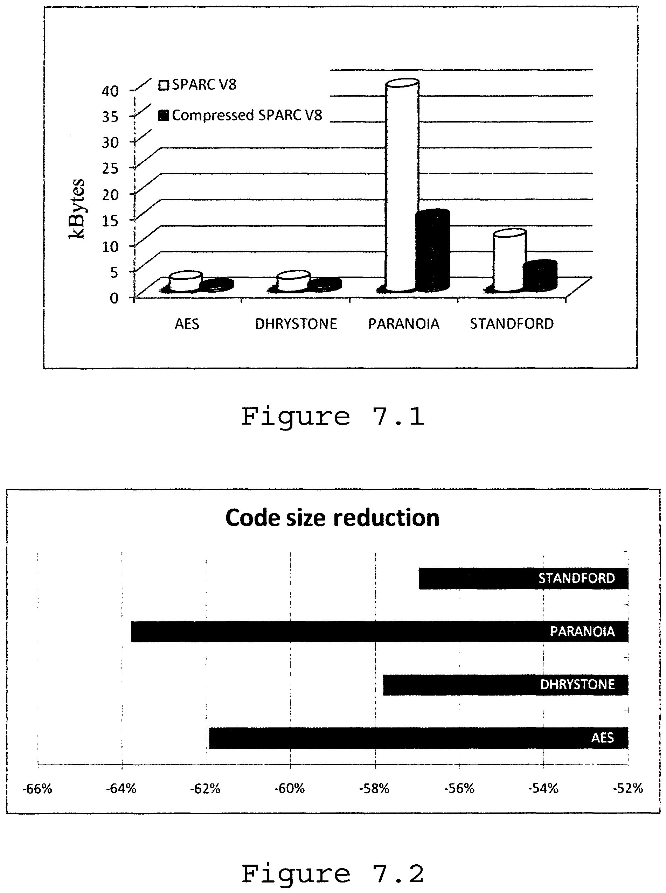

La Figure 7 représente les performances de la méthode selon l'invention.

La méthode a été appliquée aux programmes Dhrystone 2.1™, AES de MiBench™, Paranoia™ et Stanford™ compilés sur un jeu d'instructions SPARC-V8™

A la Figure 7.1 sont représentés les tailles en kilooctets (kBytes) de chacun des programmes compressé selon l'invention et ou non compressé.

A la Figure 7.2 sont représentées pour chaque programme la réduction en % de la taille du programme.

En plus de minimiser la taille mémoire, la méthode de compression et de décompression selon l'invention minimise la consommation énergétique du C.I. et augmente la vitesse de l'exécution du programme. En effet, le dispositif de décompression :
- Anticipe les accès mémoire du microprocesseur, ce qui accélère l'exécution du programme.
- Accède à des mots en mémoires qui contiennent potentiellement plusieurs instructions initiales. Le nombre d'accès mémoire est réduit, ce qui minimise la consommation énergétique. Pour une carte à puce, par exemple, la consommation de la mémoire du programme est la principale source de consommation. Une compression de 50% du programme réduit de 20% sa consommation.
- Libère de la bande passante sur les bus du microprocesseur. Les données sont accessibles plus rapidement, ce qui diminue la durée d'exécution du programme.

## Revendications

1. Méthode de compression et de décompression d'un programme initial exécutable par un microprocesseur ou interprétable par un interpréteur d'un dispositif à Circuits Intégrés, comportant les étapes suivantes de :
fourniture d'un programme initial comprenant des instructions initiales comprenant un champ opcode et un champ d'instruction ;
reformatage, par une fonction f, des instructions initiales dudit programme initial, comprenant une réorganisation des champs de bits contenus dans les instructions, pour l'obtention d'instructions intermédiaires d'un programme intermédiaire dans lequelles l'information utile contenue dans les champs d'instructions initiales est regroupée dans un champ d'information ;
détermination de Patrons de répétition de m bits dans le programme intermédiaire et comprenant m - q bits fixés à 0 ou à 1, et q bits génériques, et de définition, pour chaque Patron de répétition, d'un couple formé dudit Patron de répétition et d'une instruction compressée par une fonction h ;
remplacement des instructions intermédiaires du programme intermédiaire par les instructions compressées et de modification des liens du programme pour l'obtention d'un programme compressé par une fonction g ;
remplacement des instructions compressées du programme compressé par les instructions intermédiaires par la fonction g⁻¹ pour l'obtention du programme intermédiaire; et de
reformatage des instructions intermédiaires par la fonction f⁻¹ pour l'obtention du programme initial.

2. Méthode selon la revendication 1, **caractérisée en ce que**, à l'étape de reformatage des instructions initiales pour l'obtention d'instructions intermédiaires, le champ opcode est étendu.

3. Méthode selon l'une des revendications 1 ou 2, selon laquelle, à l'étape de reformatage des instructions initiales pour l'obtention d'instructions intermédiaires, pour augmenter la similarité dans le programme intermédiaire, l'adressage relatif est transformé en adressage absolu et/ou des champs spécifiques sont classés et/ou certains champs sont inversés.

4. Méthode selon l'une des revendications 1, 2 ou 3, selon laquelle les Patrons de répétitions, à l'étape de détermination des Patrons de répétition, sont déterminés en appliquant la méthode suivante :
- étape 1 : affectation de valeurs aux paramètres m, q et c ;
- étape 2 : de manière facultative, pour toutes les macros dans un groupe de macros, calcul de la probabilité de la valeur par bit ;
- étape 3 : de manière facultative, fixation à 0 ou 1 des bits dont la probabilité est la plus proche de 0 ou 1, respectivement ;
- étape 4 : extraction du groupe de macros, toutes les macros ne satisfaisant pas la décision précédente ;
- étape 5 : retour à l'étape 2 sauf si le nombre nécessaire de positions fixées a été atteint ;
- étape 6 : si n est le nombre de macros rattachées au Patron de répétitions, le nombre n x (m - c) de bits peut être économisé, et le Patron de répétition est ajouté à la liste des Patrons de répétition.

5. Méthode selon l'une des revendications précédentes, selon laquelle le programme compressé à l'étape de remplacement des instructions intermédiaires du programme intermédiaire par les instructions compressées et de modification des liens du programme pour l'obtention d'un programme compressé par une fonction g est crypté puis décrypté avant l'étape de remplacement des instructions compressées par les instructions intermédiaires par la fonction g⁻¹ pour l'obtention du programme intermédiaire.

6. Méthode selon la revendication 5, selon laquelle le programme crypté est décrypté à la volée.

7. Méthode selon l'une des revendications 1 à 6, selon laquelle le programme compressé est décompressé à la volée et les instructions initiales sont exécutées.

8. Méthode selon l'une des revendications 1 à 7, selon laquelle le reformatage des instructions initiales pour l'obtention d'instructions intermédiaires définit de nouveaux champs destinés aux informations de saut et/ou aux nouveaux opcodes et/ou à de la redondance pour s'assurer de l'intégrité des instructions et/ou de l'information destinée à la protection contre le déroutement du programme.

9. Méthode selon la revendication 8, selon laquelle un nouveau champ contient la signature des instructions et/ou des adresses des instructions et/ou l'adresse à laquelle on accède en cas de saut.

10. Méthode selon l'une des revendications 1 à 9, selon laquelle un champ de détection et/ou de correction ou un champ de signature sont insérés entre deux instructions compressées.

11. Méthode suivant l'une des revendications 1 à 10, **caractérisée en ce que** les patrons de répétition ont la taille des instructions intermédiaires et comprennent des caractères génériques.

12. Dispositif à Circuits Intégrés apte à exécuter un programme exécutable par un microprocesseur dudit dispositif ou à interpréter un tel programme interprétable par un interpréteur dudit dispositif, le programme étant compressé selon la méthode d'une des revendications 1 à 11.

13. Dispositif selon la revendication 12, selon lequel l'algorithme de décompression, fonctions g⁻¹ et/ou f⁻¹, est synthétisé en matériel sur un des circuits intégrés.

14. Dispositif selon l'une des revendications 12 ou 13, relié au monde extérieur par au moins un des canaux de communications suivants : Single Wire Protocol, NFC(ISO14443), USB ou l'ISO/IEC7816-3 et piloté par un microprocesseur qui exécute à la volée les instructions initiales d'un programme stockées compressées dans la mémoire d'un des circuits intégrés.

15. Dispositif suivant l'une des revendications 12 à 14, selon lequel l'ensemble des instructions compressées dudit programme est stocké dans la mémoire non volatile d'un des circuits intégrés.

16. Dispositif suivant l'une des revendications 12 à 15, selon lequel le microprocesseur est un microprocesseur RISC.

## Patentansprüche

1. Verfahren zur Komprimierung und Dekomprimierung eines durch einen Mikroprozessor ausführbaren oder durch einen Interpreter einer Vorrichtung mit integrierten Schaltungen interpretierbaren ursprünglichen Programms, die folgenden Schritte beinhaltend:
Bereitstellen eines ursprünglichen Programms, das ursprüngliche Befehle umfasst, die ein Opcode-Feld und ein Befehlsfeld umfassen;
Neuformatieren, durch eine Funktion f, der ursprünglichen Befehle des ursprünglichen Programms, eine Neuorganisation der Bitfelder umfassend, die in den Befehlen enthalten sind, für den Erhalt von Zwischenbefehlen eines Zwischenprogramms in denen die nützliche Information, die in den ursprünglichen Befehlsfeldern enthalten ist, in einem Informationsfeld zusammengefasst ist;
Bestimmen von Wiederholungsmustern von m Bits in dem Zwischenprogramm, und m - q Bits umfassend, die auf 0 oder auf 1 fixiert sind, und q Platzhalterbits und Definitionsbits für jedes Wiederholungsmuster, eines Paares, das aus dem Wiederholungsmuster und einem durch eine Funktion h komprimierten Befehl gebildet wird;
Ersetzen der Zwischenbefehle des Zwischenprogramms durch die komprimierten Befehle und Ändern der Links des Programms für den Erhalt eines durch eine Funktion g komprimierten Programms;
Ersetzen der komprimierten Befehle des durch die Zwischenbefehle durch die Funktion g⁻¹ komprimierten Programms für den Erhalt des Zwischenprogramms; und
Neuformatieren der Zwischenbefehle durch die Funktion f⁻¹ für den Erhalt des ursprünglichen Programms.

2. Verfahren nach Anspruch 1, **dadurch gekennzeichnet, dass** im Schritt des Neuformatierens der ursprünglichen Befehle für den Erhalt von Zwischenbefehlen das Opcode-Feld erweitert wird.

3. Verfahren nach einem der Ansprüche 1 oder 2, wobei im Schritt des Neuformatierens der ursprünglichen Befehle für den Erhalt von Zwischenbefehlen zum Erhöhen der Ähnlichkeit in dem Zwischenprogramm die relative Adressierung in eine absolute Adressierung umgewandelt wird, und/ oder spezielle Felder eingestuft werden, und/ oder bestimmte Felder umgekehrt werden.

4. Verfahren nach einem der Ansprüche 1, 2 oder 3, wobei die Wiederholungsmuster im Schritt des Bestimmens der Wiederholungsmuster durch Anwenden des folgenden Verfahrens bestimmt werden:
- Schritt 1: Zuweisung von Werten auf die Parameter m, q und c;
- Schritt 2: fakultativ, für alle Macros in einer Gruppe von Macros, Berechnen der Wahrscheinlichkeit des Werts je Bit;
- Schritt 3: fakultativ, Fixieren auf 0 oder 1 der Bits deren Wahrscheinlichkeit jeweils am nächsten zu 0 oder 1 liegt;
- Schritt 4: Extrahieren aus der Gruppe von Macros, aller Macros, die die vorstehende Entscheidung nicht erfüllen;
- Schritt 5: Rückkehr zu Schritt 2, außer wenn die notwendige Anzahl an fixierten Positionen erreicht worden ist;
- Schritt 6: falls n die Anzahl an Macros ist, die dem Wiederholungsmuster zugewiesen sind, kann die Anzahl n x (m - c) an Bits eingespart werden, und das Wiederholungsmuster wird zu der Liste der Wiederholungsmuster hinzugefügt.

5. Verfahren nach einem der vorstehenden Ansprüche, wobei das im Schritt des Ersetzens der Zwischenbefehle des Zwischenprogramms durch die komprimierten Befehle und Änderns der Links des Programms für den Erhalt eines durch eine Funktion g komprimierten Programms komprimierte Programm verschlüsselt wird und dann vor dem Schritt des Ersetzens der komprimierten Befehle durch die Zwischenbefehle durch die Funktion g⁻¹ für den Erhalt des Zwischenprogramms entschlüsselt wird.

6. Verfahren nach Anspruch 5, wobei das verschlüsselte Programm im Vorübergehen entschlüsselt wird.

7. Verfahren nach einem der Ansprüche 1 bis 6, wobei das komprimierte Programm im Vorübergehen dekomprimiert wird und die ursprünglichen Befehle ausgeführt werden.

8. Verfahren nach einem der Ansprüche 1 bis 7, wobei das Neuformatieren der ursprünglichen Befehle für den Erhalt von Zwischenbefehlen neue Felder definiert, die für die Sprunginformationen bestimmt sind, und/ oder für die neuen Opcodes, und/ oder für eine Redundanz, um sich von der Integrität der Befehle und/ oder von der Information, die zum Schutz gegen die Umleitung des Programms bestimmt ist, zu überzeugen.

9. Verfahren nach Anspruch 8, wobei ein neues Feld die Signatur der Befehle, und/ oder Adressen der Befehle, und/ oder die Adresse enthält, auf die man im Falle eines Sprunges zugreift.

10. Verfahren nach einem der Ansprüche 1 bis 9, wobei ein Detektions- und/ oder ein Korrekturfeld oder ein Signaturfeld zwischen zwei komprimierten Befehlen eingesetzt werden.

11. Verfahren nach einem der Ansprüche 1 bis 10, **dadurch gekennzeichnet, dass** die Wiederholungsmuster die Größe der Zwischenbefehle aufweisen und Platzhaltermerkmale umfassen.

12. Vorrichtung mit integrierten Schaltungen, die imstande ist, ein durch einen Mikroprozessor der Vorrichtung ausführbares Programm auszuführen oder ein solches Programm, das durch einen Interpreter der Vorrichtung interpretierbar ist, zu interpretieren, wobei das Programm entsprechend dem Verfahren nach einem der Ansprüche 1 bis 11 komprimiert wird.

13. Vorrichtung nach Anspruch 12, wobei der Dekomprimierungsalgorithmus, Funktionen g⁻¹ und/ oder f⁻¹, hardwaregemäß auf einer der integrierten Schaltungen synthetisiert wird.

14. Vorrichtung nach einem der Ansprüche 12 oder 13, die mit der Außenwelt durch mindestens einen der folgenden Kommunikationskanäle verbunden ist: Single Wire Protocol, NFC (ISO14443), USB oder ISO/IEC7816-3 und durch einen Mikroprozessor gesteuert wird, der die ursprünglichen Befehle eines Programmes, die komprimiert in dem Speicher einer der integrierten Schaltungen gespeichert werden, im Vorübergehen ausführt.

15. Vorrichtung nach einem der Ansprüche 12 bis 14, wobei sämtliche komprimierten Befehle des Programmes in dem nicht flüchtigen Speicher einer der integrierten Schaltungen gespeichert werden.

16. Vorrichtung nach einem der Ansprüche 12 bis 15, wobei der Mikroprozessor ein RISC-Mikroprozessor ist.

## Claims

1. A method for compressing and decompressing an initial program executable by a microprocessor or interpretable by an interpreter of an integrated circuit device, comprising the following steps of:
providing an initial program comprising initial instructions comprising an opcode field and an instruction field;
reformatting, by a function f, the initial instructions of said initial program, comprising a reorganisation of the bit fields contained in the instructions, to obtain intermediate instructions of an intermediate program in which the useful information contained in the initial instruction fields is grouped in an information field;
determining repetition templates of m bits in the intermediate program and comprising m - q bits set to 0 or to 1, and q generic bits, and defining, for each repetition template, a pair formed of said repetition template and an instruction compressed by a function h;
replacing intermediate instructions of the intermediate program by the compressed instructions and modifying the links of the program to obtain a compressed program by a function g;
replacing the compressed instructions of the compressed program by the intermediate instructions by the function g⁻¹ to obtain the intermediate program; and of reformatting the intermediate instructions by the function f⁻¹ to obtain the initial program.

2. The method according to claim 1, **characterised in that**, in the step of reformatting the initial instructions to obtain intermediate instructions, the opcode field is extended.

3. The method according to one of claims 1 or 2, whereby, in the step of reformatting the initial instructions to obtain intermediate instructions, to increase the similarity in the intermediate program, the relative addressing is converted to absolute addressing and/or specific fields are classified and/or certain fields are inverted.

4. The method according to one of claims 1, 2 or 3, whereby the repetition templates, in the step of determining the repetition templates, are determined by applying the following method:
- step 1: assigning values to the parameters m, q and c;
- step 2: optionally, for all the macros in a group of macros, computing the probability of the value per bit;
- step 3: optionally, setting to 0 or to 1 the bits of which the probability is closest to 0 or 1, respectively;
- step 4: extracting from the group of macros, all the macros not satisfying the preceding decision;
- step 5: returning to step 2 unless the necessary number of positions set has been reached;
- step 6: if n is the number of macros linked with the repetition template, the number n x (m - c) of bits may be saved, and the repetition template is added to the list of repetition templates.

5. The method according to one of the preceding claims, whereby the program compressed in the step of replacing the intermediate instructions of the intermediate program by the compressed instructions and of modifying the links of the program to obtain a program compressed by a function g is encrypted then decrypted prior to the step of replacing the compressed instructions by the function g⁻¹ to obtain the intermediate program.

6. The method according to claim 5, whereby the encrypted program is decrypted on-the-fly.

7. The method according to one of claims 1 to 6, whereby the compressed program is decompressed on-the-fly and the initial instructions are executed.

8. The method according to one of claims 1 to 7, whereby the reformatting of the initial instructions to obtain intermediate instructions defines new fields intended for the jump information and/or new opcodes and/or for redundancy to ensure the integrity of the instructions and/or information intended to protect against the diversion of the program.

9. The method according to claim 8, whereby a new field contains the signature of the instructions and/or addresses of the instructions and/or the address accessed in the case of a jump.

10. The method according to one of claims 1 to 9, whereby a detection and/or correction field or a signature field are inserted between two compressed instructions.

11. The method according to one of claims 1 to 10, **characterised in that** the repetition templates have the size of the intermediate instructions and comprise generic characters.

12. An integrated circuit device capable of executing a program executable by a microprocessor of said device or of interpreting such a program interpretable by an interpreter of said device, the program being compressed according to the method of one of claims 1 to 11.

13. The device according to claim 12, whereby the decompression algorithm, functions g-¹ and/or f⁻¹, is synthesised in hardware on one of the integrated circuits.

14. The device according to one of claims 12 or 13, connected to the outside world by at least one of the following communication channels: Single Wire Protocol, NFC(ISO14443), USB or ISO/IEC7816-3 and controlled by a microprocessor that executes on-the-fly the initial instructions of a program stored compressed in the memory of one of the integrated circuits.

15. The device according to one of claims 12 to 14, whereby the set of compressed instructions of said program is stored in the non-volatile memory of one of the integrated circuits.

16. The device according to one of claims 12 to 15, whereby the microprocessor is a RISC microprocessor.
